# EUROPEAN PATENT APPLICATION

(11) **EP 4 696 973 A1**
(43) Date of publication of application: **18.02.2026**
(21) Application number: 25195178.6
(22) Date of filing: 11.08.2025
(51) Int. Cl.: F28F 9/02

(54) **CURRENT COLLECTOR AND LIQUID COOLING ASSEMBLY**

(30) Priority: 12.08.2024 CN 202421951557 U; 08.11.2024 WO PCT/CN2024/130757
(71) Applicant: Eve Energy Co., Ltd., Huizhou, Guangdong 516006 (CN)
(72) Inventor: TANG, Jing, Huizhou, Guangdong, 516006 (CN); WANG, Yuanyuan, Huizhou, Guangdong, 516006 (CN); ZHOU, Xiao, Huizhou, Guangdong, 516006 (CN); HUANG, Liansheng, Huizhou, Guangdong, 516006 (CN)
(74) Representative: Berggren Oy

(57) **Abstract**

A current collector includes: a first current collector shell (1); a second current collector shell (2), capped with the first current collector shell to form a current collector cavity having a converging opening (3); a current collector blocker (4), being inserted to an interior of the current collector cavity and dividing the current collector cavity into a first liquid guiding cavity (51) and a second liquid guiding cavity (52). Both the first liquid guiding cavity and the second liquid guiding cavity are communicated to the converging opening; the current collector blocker is arranged with a first bearing portion (41) attached to and supporting the first current collector shell and a second bearing portion (41) attached to and supporting the second current collector shell.

## Description

### TECHNICAL FIELD

Embodiments of the present disclosure relate to the technical field of batteries, and more specifically, to a current collector and a liquid cooling assembly.

### BACKGROUND

In the art, a cylindrical battery has a high energy density and a high power and is one of favored selections for a battery PACK. In this context, importance of a battery thermal management system is becoming increasingly prominent. Liquid cooling technology, as a highly-efficient heat dissipation method, has become one of key technologies to improve performance of electric vehicles. Typically, for a liquid cooling method for a cylindrical battery pack, a side of a serpentine tube is attached to a cell.

The serpentine tube includes a tube body having a channel defined therein and a current collector head having two cavities therein. An end of the tube body is connected to the current collector head. Two ends of the channel are respectively communicated to the two cavities of the current collector head. The current collector head is connected to an inlet pipe communicated with one of the two cavities and an outlet pipe communicated with the other one of the two cavities.

However, the current collector head is made by performing a machined-current-collector process. For the machined-current-collector process in the art, a large amount of labor and material resources are required, and a machining process for achieving precision of components cannot be properly controlled. Therefore, production costs may be high, which is unfavorable for a current severe cost-reduction requirements.

### SUMMARY

The present disclosure provides a current collector, including: a first current collector shell; a second current collector shell, capped with the first current collector shell to form a current collector cavity having a converging opening; a current collector blocker, being inserted to an interior of the current collector cavity and dividing the current collector cavity into a first liquid guiding cavity and a second liquid guiding cavity. Both the first liquid guiding cavity and the second liquid guiding cavity are communicated to the converging opening; the current collector blocker is arranged with a first bearing portion attached to and supporting the first current collector shell and a second bearing portion attached to and supporting the second current collector shell.

The present disclosure further provides a liquid cooling assembly including the current collector as described in the above.

By arranging the first current collector shell, the second current collector shell and the current collector blocker to be mated with each other, the first liquid guiding cavity and the second liquid guiding cavity for guiding the fluid are formed. Furthermore, each of the first current collector shell, the second current collector shell and the current collector blocker can be individually processed and produced. Therefore, large-quantity and automated production of the current collector is achieved, and difficulty of processing is reduced. Compared to the traditional machine processing of the current collector, production costs of the current collector are lowered by about 5%, such that the high cost of processing and producing the current collector blocker is solved.

In addition, by arranging the current collector blocker, overall structural strength of the current collector is improved, the stability and processing accuracy of the current collector are ensured during stamping molding, brazing reinforcement processes and other processing processes. Deformation of the first current collector shell and the second current collector shell during production is reduced or avoided. In this way, difficulty in controlling precision of the current collector head during the machining process may be solved.

### BRIEF DESCRIPTION OF THE DRAWINGS

FIG. 1 is a first structural schematic view of an assembled currently collector according to an embodiment of the present disclosure.
FIG. 2 is an enlarged view of a portion A in FIG. 1.
FIG.3 is a second structural schematic view of the assembled currently collector according to an embodiment of the present disclosure.
FIG. 4 is a first exploded view of the currently collector according to an embodiment of the present disclosure.
FIG. 5 is an enlarged view of a portion B in FIG. 4.
FIG. 6 is a second exploded view of the currently collector according to an embodiment of the present disclosure.
FIG. 7 is a structural schematic view of a blocker for the currently collector according to an embodiment of the present disclosure.

Reference numerals in the drawings: 1-first current collector shell, 11-first cavity wall, 12-first folded edge portion, 13-first tube connection port, 14-first tube connection hole, 15-first tube connection wall, 16-first liquid limiting portion, 2-second current collector shell, 21-second cavity wall, 22-second folded edge portion, 23-second tube connection port, 24-second tube connection hole, 25-second tube connection wall, 26-second liquid limiting portion, 3-converging opening, 4 -current collector blocker, 41 -first bearing portion, 42 -second bearing portion, 43 - blocker gripping portion, 44 -first support surface, 45 -second support surface, 51 -first liquid guiding cavity, 52 -second liquid guiding cavity, 6 -snap structure, 7 - snap slot.

### DETAILED DESCRIPTIONS

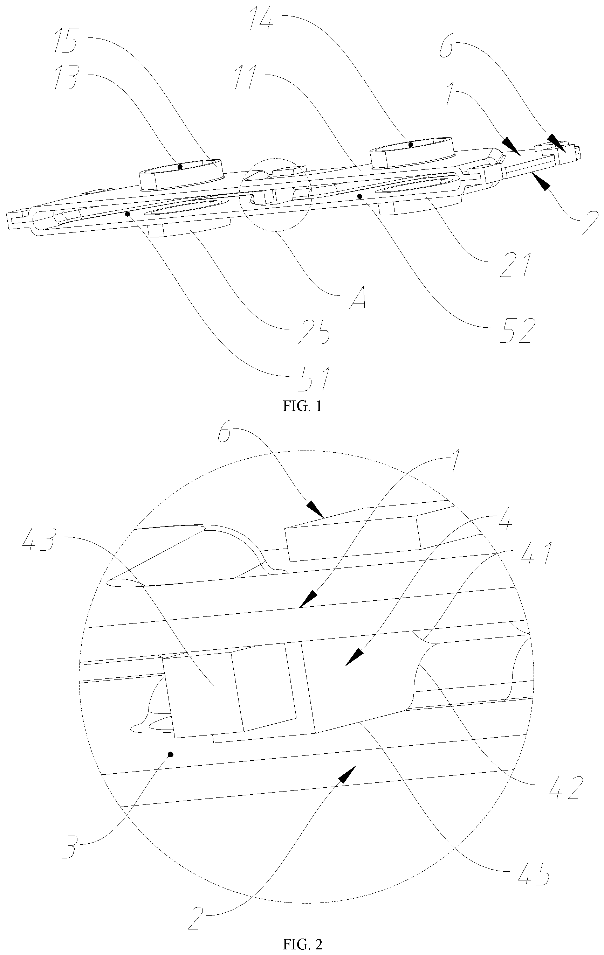

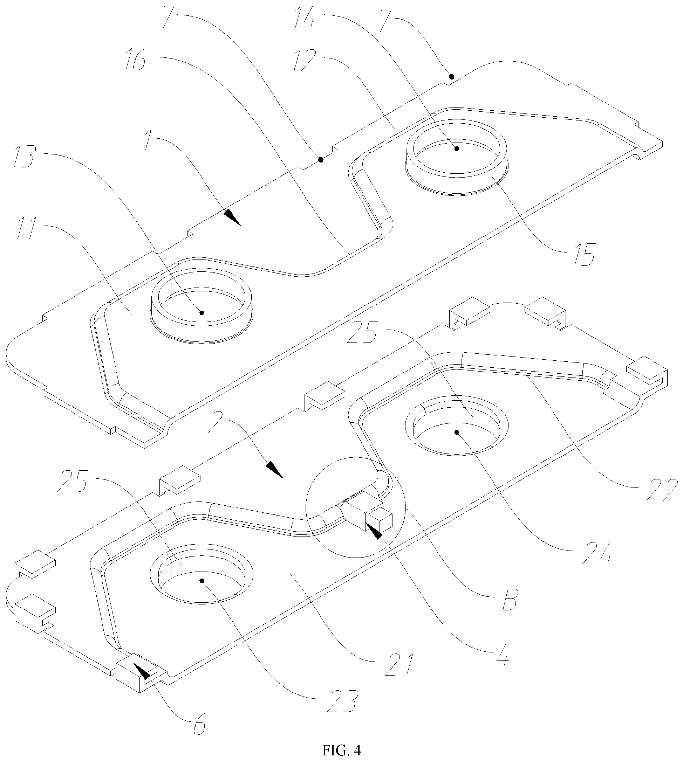

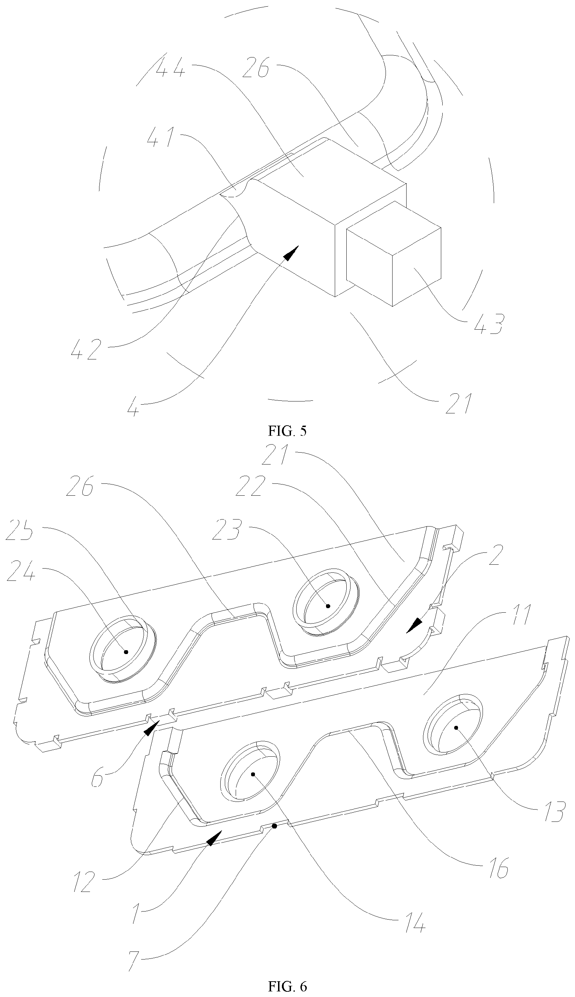

As shown in FIGS. 1 to 6, the present disclosure provides a current collector, including a first current collector shell 1, a second current collector shell 2, and a current collector blocker 4. A first cavity wall 11 is formed on and protruding from the first current collector shell 1. A first folded edge portion 12 is formed between the first cavity wall 11 and the first current collector shell 1. That is, the first current collector shell 1, the first folded edge portion 12, and the first cavity wall 11 are integrally molded to form a one-piece structure. Similarly, a second cavity wall 21 is formed on and protruding from the second current collector shell 2. A second folded edge portion 22 is formed between the second cavity wall 21 and the flow current collector shell 2. That is, the second current collector shell 2, the second folded edge portion 22, and the second cavity wall 21 are integrally molded to form a one-piece structure. The first folded edge portion 12, the first cavity wall 11, the second folded edge portion 22, and the second cavity wall 21 are all formed by mold stamping.

In this way, the current collector can be produced by mold stamping, and therefore, a large number of current collector can be automatically produced in one batch and in production lines. Compared to the traditional machining process, the production in the present disclosure substantially saves time and improves a production efficiency. Furthermore, difficulty of processing and production costs are greatly reduced, precision of the current collector is ensured and improved, errors during production and assembly processes may be reduced.

As an unexpected effect, the stamping mold for the current collector may be adjusted according to application scenarios, such that the current collector may be molded to have various shapes. Therefore, the situation in the art where a milling cutter in the traditional process of producing the current collector cannot be long enough to be inserted deeply into a drilling cavity, can be solved. Therefore, according to the present disclosure, various needs of the battery pack and stringent assembly requirements in a space inside the battery pack can be met.

In some embodiments, as shown in FIGS. 1, 2 and 3, the first current collector shell 1 and the second current collector shell 2 are capped to each other to form a current collector cavity having a converging opening 3. That is, after the first current collector shell 1 and the second current collector shell 2 are capped to each other, the first folded edge portion 12, the first cavity wall 11, the second folded edge portion 22, and the second cavity wall 21 enclose to form the current collector cavity having the converging opening 3. The above-described current collector blocker 4 is inserted to an interior of the current collector cavity and divides the current collector cavity into a first liquid guiding cavity 51 and a second liquid guiding cavity 52. Both the first liquid guiding cavity 51 and the second liquid guiding cavity 52 are communicated to the converging opening 3. The current collector blocker 4 is arranged with: a first bearing portion 41 attached to and supporting the first current collector shell 1; and a second bearing portion 42 attached to and supporting the second current collector shell 2.

Specifically, as shown in FIGS. 1, 2, 4, 5, and 6, a shape and a size of the first bearing portion 41 is adapted to a shape and a size of the first folded edge portion 12; and a shape and a size of the second folded edge portion 22 is adapted to a shape and a size of the second bearing portion 42. In this way, the first bearing portion 41 may abut against a surface of the first folded edge portion 12, and the second bearing portion 42 may abut against a surface of the second folded edge portion 22, such that sealing performance between the first bearing portion 41 of the current collector blocker 4 and the first folded edge portion 12 of the first current collector shell 1 and between the second bearing portion 42 of the current collector blocker 4 and the second folded edge portion 22 of the second current collector shell 2 is ensured. It is ensured that the first liquid guiding cavity 51 and the second liquid guiding cavity 52 do not interfere with each other, preventing liquid leakage between the first liquid guiding cavity 51 and the second liquid guiding cavity 52.

In the present embodiment, as shown in FIGS. 1, 2, 4, 5 and 6, a side of the current collector blocker 4 near the first cavity wall 11 is defined as a first support surface 44, and a side of the current collector blocker 4 near the second cavity wall 21 is defined as a second support surface 45. The first support surface 44 abuts against the first cavity wall 11, and the second support surface 45 abuts against the second cavity wall 21.

In this way, the first folded edge portion 12 of the first current collector shell 1 is subjected to the first bearing portion 41 of the current collector blocker 4, and the second bearing portion 42 of the second current collector shell 2 is subjected to the second bearing portion 42 of the current collector blocker 4. The first cavity wall 11 of the first current collector shell 1 is subjected to the first support surface 44 of the current collector blocker 4, and the second cavity wall 21 of the second current collector shell 2 is subjected to the second support surface 45 of the current collector blocker 4. When the current collector blocker 4 is inserted to the interior of the current collector cavity, the current collector blocker 4 forms a support beam having a separation function in the current collector cavity. In this way, structural strength of the current collector is greatly improved, the current collector is prevented from collapsing or sinking during production or while in use, and liquid in the first liquid guiding cavity 51 and liquid in the second liquid guiding cavity 52 may flow smoothly and stably.

In some embodiments, a first tube connection port 13 and a first tube connection hole 14 are defined in the first cavity wall 11, each of the first tube connection port 13 and the first tube connection hole 14 has a first tube connection wall 15 extending towards an outside of the current collector cavity. A second tube connection port 23 and a second tube connection hole 24 are defined in the second cavity wall 21. The second tube connection port 23 and the first tube connection port 13 are arranged corresponding to each other, and the second tube connection port 23 and the first tube connection port 13 are communicated to the first liquid guiding cavity 51. The second tube connection hole 24 is arranged corresponding to the first tube connection hole 14, and both the second tube connection hole 24 and the first tube connection hole 14 are communicated with the second liquid guiding cavity 52. Each of the second tube connection port 23 and the second tube connection hole 24 has a second tube connection wall 25 extending towards the outside of the current collector cavity.

In this way, the first tube connection port 13, the first tube connection hole 14, the second tube connection port 23 and the second tube connection hole 24 may be inserted to be connected with an external tube. The external tube abuts against the first tube connection wall 15, and another external tube abuts against the second tube connection wall 25. In this way, a heat exchange medium (such as a cooling oil, water, and so on) do not leak from a space between the external tube and the first tube connection wall 15 and/or between the external tube and the second tube connection wall 25, preventing a short circuit of the battery pack. The heat exchange medium enters, through the first tube connection port 13, the first liquid guiding cavity 51 of the current collector cavity. A portion of the heat exchange medium flows through a channel of a serpentine tube to return to the second liquid guiding cavity 52 of the current collector cavity to be converged with another portion of the heat exchange medium flowing through the second tube connection hole 24. The portion of the heat exchange medium and the another portion of the heat exchange medium are converged to flow through the first tube connection hole 14 to reach another external tube. Flow paths are only for illustrative to facilitate understanding a cooling circulation loop while the current collector is being in use, but do not limit the present disclosure. The cooling circulation loop may be adjusted accordingly if connection is changed.

In an embodiment, the first tube connection wall 15 is arranged with a first tube connection member, the second tube connection wall 25 is arranged with a second tube connection member. Both the first tube connection member and the second tube connection member are communicated to the current collector cavity. Specifically, the first tube connection member communicated to the first tube connection port 13 is defined as a first tube connector, the first tube connection member communicated to the first tube connection hole 14 is defined as a first tube connection portion. The first liquid guiding cavity 51 of the current collector cavity is communicated to the first tube connector through the first tube connection port 13, and the second liquid guiding cavity 52 of the current collector cavity is communicated to the first tube connection portion through the first tube connection hole 14.

The second tube connection member connected to the second tube connection port 23 is defined as a second tube connector, and the second tube connection member connected to the second tube connection hole 24 is defined as a second tube connection portion, and the first liquid guiding cavity 51 of the current collector cavity is communicated to the second tube connector through the second tube connection port 23, and the second liquid guiding cavity 52 of the current collector cavity is communicated to the second tube connection portion through the second tube connection hole 24.

It should be noted that, in order to ensure assembly of the current collector to be more secured, brazing may be performed to achieve connection and fixation.

In some embodiments, a brazing coating is arranged on a peripheral edge of the first current collector shell 1 and/or a peripheral edge of the second current collector shell 2. A brazing cover is arranged on the first bearing portion 41 and the second bearing portion 42 of the current collector blocker 4. After the first current collector shell 1 and the second current collector shell 2 are capped to each other, a work fixture is used to insert the current collector blocker 4 to the interior of the current collector cavity, and the current collector is then welded and fixed at a high-temperature brazing furnace. The whole process is simple and efficient.

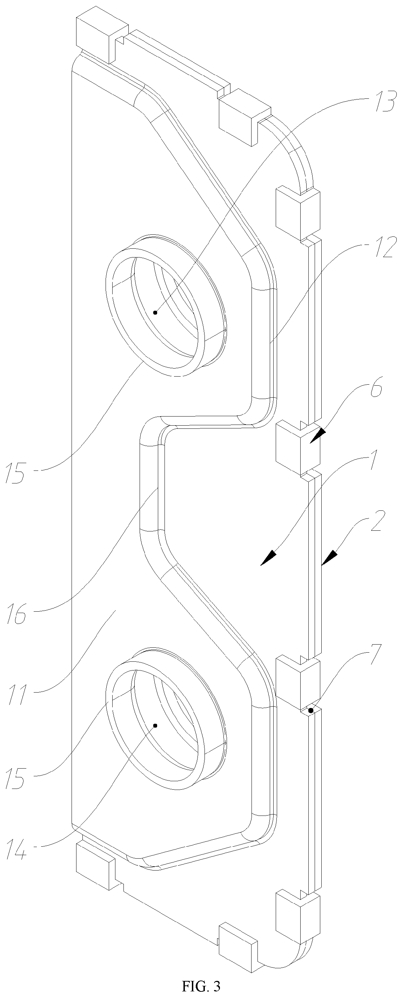

In an embodiment, as shown in FIGS. 3, 4, 5, and 6, the first folded edge portion 12 is bent towards a side of the converging opening 3 to form a first liquid limiting portion 16. The first liquid limiting portion 16 is disposed between the first tube connection port 13 and the first tube connection hole 14. The second folded edge portion 22 is bent towards a side of the converging opening 3 to form a second liquid limiting portion 26. The second liquid limiting portion 26 is disposed between the second tube connection port 23 and the second tube connection hole 24. Both the first liquid limiting portion 16 and the second liquid limiting portion 26 are connected to the current collector blocker 4. The connection herein may be abutting, or a combination of abutting and brazed connection.

In this way, a length of the current collector blocker 4 can be shortened, materials used for producing the current collector blocker 4 is reduced, and an overall weight of stamping the current collector assembly is reduced. Therefore, the stamped current collector assembly and the battery pack are light in weight, and at the same time, production precision and structural strength of the stamped current collector assembly may be improved.

In an embodiment, as shown in FIGS. 1 to 4, a snap structure 6 is arranged at the periphery edge of one of the first current collector shell 1 and the second current collector shell 2, and the periphery edge of the other one of the first current collector shell 1 and the second current collector shell 2 is snapped to the snap structure 6. A plurality of snap structures 6 may be arranged and may be evenly distributed along the periphery edge of the first current collector shell 1 or the periphery edge of the second current collector shell 2. Alternatively, one snap structure 6 may be arranged and may extend along the periphery edge of the first current collector shell 1 or the periphery edge of the second current collector shell 2. In this way, the snap structure 6 enables the first current collector shell 1 and the second current collector shell 2 to be mounted and fixed preliminarily, improving an assembly efficiency and ease of assembly.

In an embodiment, as shown in FIGS. 1, 3, 4, and 6, a snap slot 7 is arranged at the periphery edge of the other one of the first current collector shell 1 and the second current collector shell 2. In this way, as the snap structure 6 is snapped to the snap slot 7, the first current collector shell 1 and the second current collector shell 2 are prevented from offsetting and misaligning along a projection direction of the converging opening 3, such that positioning can be achieved quickly.

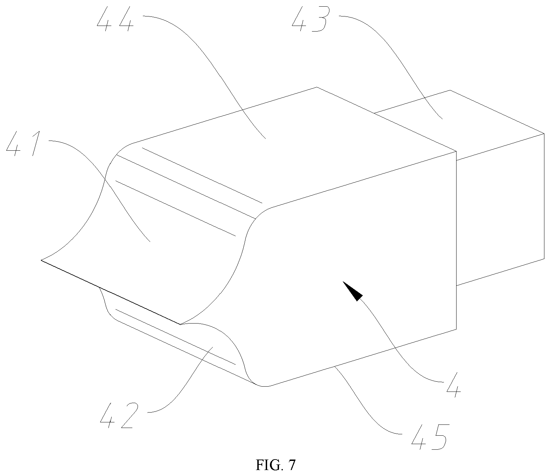

In an embodiment, as shown in FIGS. 1, 2, 4, 5, and 7, the current collector blocker 4 is arranged with a blocker gripping portion 43. The blocker gripping portion 43 is disposed on a side of the current collector blocker 4 near the convergence opening 3. In this way, a user can hold the blocker gripping portion 43 to arrange the current collector blocker 4 into the current collector cavity until the first bearing portion 41 on the other side of the current collector blocker 4 is attached to and abuts against the first liquid limiting portion 16, and the second bearing portion 42 on the other side of the current collector blocker 4 is attached to and abuts against the second liquid limiting portion 26. At the same time, a risk of fingers of the user being pinched between the current collector blocker 4 and the first current collector shell 1 and/or between the current collector blocker 4 and the second current collector shell 2 can be effectively avoided.

Based on the above-described structure and connection of the current collector, the present disclosure further discloses a liquid cooling assembly including the above-described current collector.

## Claims

1. A current collector, comprising:
a first current collector shell (1);
a second current collector shell (2), capped with the first current collector shell (1) to form a current collector cavity having a converging opening (3);
a current collector blocker (4), being inserted to an interior of the current collector cavity and dividing the current collector cavity into a first liquid guiding cavity (51) and a second liquid guiding cavity (52); wherein both the first liquid guiding cavity (51) and the second liquid guiding cavity (52) are communicated to the converging opening (3); the current collector blocker (4) is arranged with a first bearing portion (41) attached to and supporting the first current collector shell (1) and a second bearing portion (41) attached to and supporting the second current collector shell (2).

2. The current collector according to claim 1, wherein at least one snap structure (6) is arranged at a periphery edge of one of the first current collector shell (1) and the second current collector shell (2); and the periphery edge of the other one of the first current collector shell (1) and the second current collector shell (2) is snapped to the snap structure (6).

3. The current collector according to claim 2, wherein, when the number of the at least one snap structure (6) is more than one, the more than one snap structures (6) are evenly distributed along the periphery edge; and
when the number of the at least one snap structure (6) is one, the one snap structure (6) extends along the periphery edge.

4. The current collector according to claim 2 or 3, wherein a snap slot (7) is arranged on the periphery edge of the other one of the first current collector shell (1) and the second current collector shell (2) and is snapped with the snap structure (6).

5. The current collector according to any one of claims 1 to 4, wherein the current collector blocker (4) is further arranged with a blocker gripping portion (43), the blocker gripping portion (43) is disposed at a side of the current collector blocker (4) near the converging opening (3).

6. The current collector according to any one of claims 1 to 5, wherein a first cavity wall (11) is formed on and protruding from the first current collector shell (1), a first folded edge portion (12) is formed between the first cavity wall (11) and the first current collector shell (1); a shape and a size of the first folded edge portion (12) is adapted to a shape and a size of the first bearing portion (41);
and/or
a second cavity wall (12) is formed on and protruding from the second current collector shell (2), a second folded edge portion (22) is formed between the second cavity wall (12) and the second current collector shell (2); a shape and a size of the second folded edge portion (22) is adapted to a shape and a size of the second bearing portion (41).

7. The current collector according to claim 6, wherein the first bearing portion (41) is subjected to a force applied from the first folded edge portion (12), the second bearing portion (42) is subjected to a force applied from the second folded edge portion (22).

8. The current collector according to claim 6 or 7, wherein the first bearing portion (41) is sealed to the first folded edge portion (12); the second bearing portion (42) is sealed to the second folded edge portion (22); and the first liquid guiding cavity (51) and the second liquid guiding cavity (52) are dis-communicated with each other.

9. The current collector according to claim 6, wherein a side of the current collector blocker (4) near the first cavity wall (11) is defined as a first support surface (44), the first support surface (44) abuts against the first cavity wall (11);
and/or
a side of the current collector blocker (4) near the second cavity wall (12) is defined as a second support surface (45), the second support surface (45) abuts against the second cavity wall (12).

10. The current collector according to claim 9, wherein the first support surface (44) is subjected to a force applied from the first cavity wall (11); and the second support surface (45) is subjected to a force applied from the second cavity wall (12).

11. The current collector according to claim 6, wherein the first cavity wall (11) defines a first tube connection port (13) and a first tube connection hole (14); each of the first tube connection port (13) and the first tube connection hole (14) is arranged with a first tube connection wall (15) extending towards an outside of the current collector cavity;
the second cavity wall (12) defines a second tube connection port (23) and a second tube connection hole (24); the second tube connection port (23) is disposed corresponding to the first tube connection port (13); the second tube connection hole (24) is disposed corresponding to the first tube connection hole (14); each of the second tube connection port (23) and the second tube connection hole (24) is arranged with a second tube connection wall (25) extending towards the outside of the current collector cavity.

12. The current collector according to claim 11, wherein the first folded edge portion (12) is bent towards a side of the converging opening (3) to form a first liquid limiting portion (16), the first liquid limiting portion (16) is disposed between the first tube connection port (13) and the first tube connection hole (14); the second folded edge portion (22) is bent towards a side of the converging opening (3) to form a second liquid limiting portion (26); the second liquid limiting portion (26) is disposed between the second tube connection port (23) and the second tube connection hole (24); the first liquid limiting portion (16) and the second liquid limiting portion (26) are both connected to the current collector blocker (4).

13. The current collector according to claim 12, wherein the first liquid limiting portion (16) and the second liquid limiting portion (26) abut against and/or brazing welded with the current collector blocker (4).

14. The current collector according to claim 11, wherein the first connection wall is arranged with a first tube connection member; and the second connection wall is arranged with a second tube connection member.

15. A liquid cooling assembly, comprising the current collector according to any one of claims 1 to 14.
